# EUROPÄISCHE PATENTSCHRIFT

(11) **EP 0 878 358 B1**
(45) Veröffentlichungstag und Bekanntmachung des Hinweises auf die Patenterteilung: **17.12.2003**
(21) Anmeldenummer: 98106937.0
(22) Anmeldetag: 16.04.1998
(51) Int. Cl.: B60R 21/16

(54) **Aufprallschutzeinrichtung für einen Insassen eines Fahrzeuges**
Crash protecting device for a motor vehicle occupant
Dispositif de protection en cas d'accident pour un occupant de véhicule automobile

(30) Priorität: 16.05.1997 DE 19720588
(43) Veröffentlichungstag der Anmeldung: 18.11.1998
(73) Patentinhaber: Dr.Ing.h.c. F. Porsche Aktiengesellschaft, 70435 Stuttgart (DE)
(72) Erfinder: Heinz, Martin, 70182 Stuttgart (DE); Trick, Fred, 71277 Rutesheim (DE)

(56) Entgegenhaltungen:
- EP-A- 0 586 131
- EP-A- 0 829 395
- DE-A- 2 333 888
- DE-A- 4 305 050
- DE-C- 4 430 412
- US-A- 5 149 130
- US-A- 5 174 601
- US-A- 5 205 584
- US-A- 5 249 825

## Beschreibung

Die Erfindung betrifft eine Seitenaufprallschutzeinrichtung für einen Insassen eines Fahrzeuges mit einem mit einem Gasgenerator zusammenwirkenden aufblasbaren Gassack, der mit zumindest einem innenliegenden Fangband versehen ist, gemäß dem Oberbegriff des Patentanspruchs 1.

Aus der DE 4142 326 A1 geht ein Gassack für eine Aufprallschutzeinrichtung hervor, der von einem Gasgenerator befüllt wird, wobei die Befüllungsform durch mindestens ein Fangband gesteuert wird, das innerhalb des Gassacks zwei Wandabschnitte verbindet. Nachteilig an dieser Anordnung ist, daß das Fangband mit zwei beabstandeten Wandabschnitten des Gassacks verbunden ist und daß ferner eine separate Befestigung von Gasgenerator und Gassack vorgesehen ist, wodurch ein hoher Montageaufwand erforderlich ist.

Die DE 44 30 412 C zeigt eine Seitenaufprallschutzeinrichtung für einen Insassen eines Fahrzeuges mit einem mit einem Gasgenerator zusammenwirkenden aufblasbaren Gassack, der durch eine Vielzahl von definiert angeordneten beabstandeten innenliegenden Fangbändern in zwei miteinander verbundene, übereinander liegende Kammern unterteilt ist, wobei eine erste Kammer dem Brust/Beckenbereich des Insassen und eine zweite Kammer den Kopfbereich des Insassen zugeordnet ist und im Kollisionsfall die erste Kammer vor der zweiten Kammer aufgeblasen wird. Der Gasgenerator ist dabei entfernt vom umfangseitigen Rand des Gassackes angeordnet.

Bei dieser Anordnung ist keine innenliegende Trennwand zwischen beiden Kammern des Gassackes vorgesehen, sondern eine Vielzahl von beabstandet angeordneten Fangbändern. Ferner ist ein sog, Rundgenerator vorgesehen, der nur mit einem relativ kleinen Teilbereich in das Innere der ersten Kammer hineinragt. Darüber hinaus ist in der ersten Kammer kein Fangband angeordnet, das einerseits mit einem Generatorträger eines Rohrgenerators und andererseits mit einer dem Insassen zugekehrten Gewebelage des Gassackes verbunden ist.

Aufgabe der Erfindung ist es, an einem Gassack mit einem innenliegenden Fangband und an einem Gasgenerator solche Vorkehrungen zu treffen, daß der Montageaufwand von Gassack, Gasgenerator und Fangband vereinfacht wird.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anbindung des einen Endes des Fangsbandes an den Gasgenerator eine zusätzliche Befestigung für das Fangband eingespart wird, wodurch der Montageaufwand verringert wird. Vorzugsweise ist eine derartige Fangbandanordnung an einem durch eine Trennwand in zwei übereinanderliegende Kammern unterteilten Gassack einer Seitenaufprallschutzeinrichtung vorgesehen, wobei das Fangband in der dem Brust- / Beckenbereich des Insassen zugekehrten ersten Kammer vorgesehen ist. Als Generator wird ein langgestreckter Rohrgenerator verwendet, der innerhalb der ersten Kammer des Gassacks angeordnet ist. Durch die Anordnung einer Reißnaht am Fangband wird die Geschwindigkeit und der Weg der dem Insassen zugekehrten Seite des Gassacks reduziert (zeitliche Begrenzung der Auslenkung während der Entfaltung) und zugleich wird die Umfangsnaht des Gassackes und das Gewebe entlastet. Das zweiteilig ausgebildete Fangband ist zumindest im Bereich der Reißnaht beidseitig durch Schutzlagen abgedeckt, wodurch eine theoretische Belastung der Reißnaht durch den austretenden Gasstrom des Gasgenerators vermieden wird. Bei einem definierten Druck im Innern der ersten Kammer reißt die Reißnaht und der Gassack bewegt sich weiter in Richtung Insassen. Abnäher sorgen ebenfalls für ein definiertes Aufblasen des Gassackes, wobei sich die Abnäher bei einem bestimmten Innendruck lösen. Zur Halterung des innenliegenden Rohrgenerators ist ein langgestreckter Generatorträger vorgesehen, der auf der dem Rohrgenerator abgekehrten Seite örtlich vorstehende Schraubbolzen aufweist. An den Schraubbolzen sind das gasgeneratorseitige Ende des Fangbandes und der Gassack eingehängt, wobei die Schraubbolzen mit dem angrenzenden Gehäuse über eine Schraubverbindung in Lage gehalten sind.

Ein Ausführungsbeispiel der Erfindung ist in den Zeichnungen dargestellt und wird im folgenden näher erläutert.

Es zeigt
- Fig. 1: eine Teilseitenansicht auf eine Seitenaufprallschutzeinrichtung für einen Insassen eines Fahrzeuges,

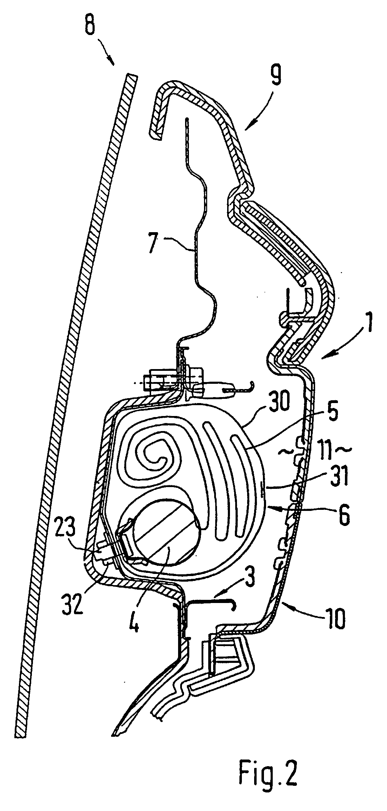

- Fig. 2: einen Schnitt nach der Linie II-II der Fig. 1 in größerer Darstellung, wobei die Seitenaufprallschutzeinrichtung eine versenkte Ruhestellung einnimmt,
- Fig. 3: einen Schnitt entsprechend Fig. 2, jedoch mit teilweise entfaltetem Gassack,

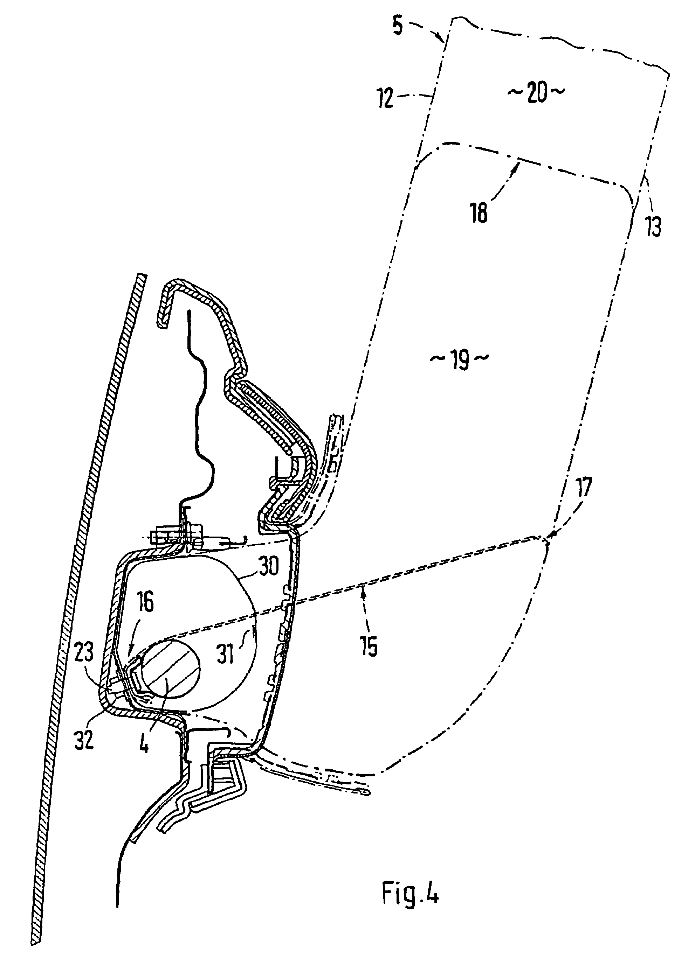

- Fig. 4: einen Schnitt entsprechend Fig. 3, jedoch mit vollständig entfaltetem Gassack,
- Fig. 5: eine perspektivische Ansicht auf den Gasgenerator mit dem Generatorträger und
- Fig. 6: eine Seitenansicht auf den Gassack in nicht zusammengefalteter Position.

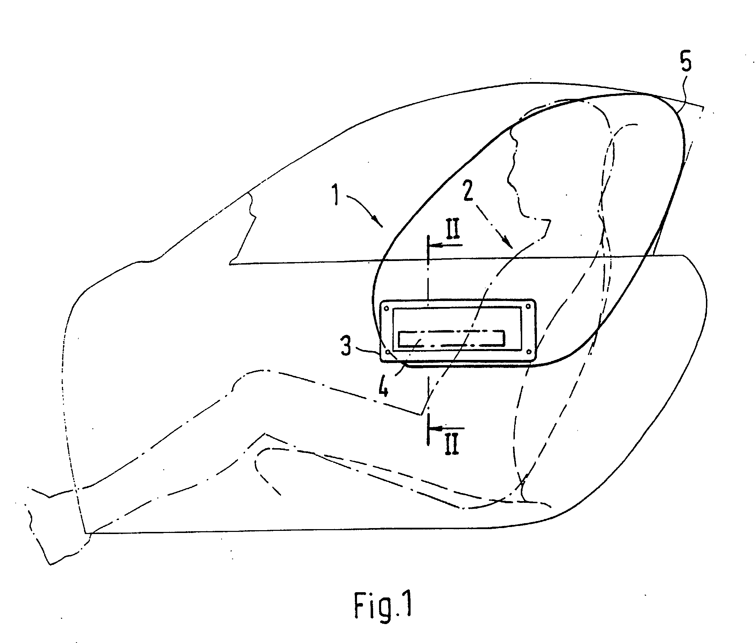

Eine Aufprallschutzeinrichtung 1 für einen Insassen 2 eines Fahrzeuges umfaßt ein Gehäuse 3, einen Gasgenerator 4 und einen aufblasbaren Gassack 5, wobei das Gehäuse 3, der Gasgenerator 4 und der Gassack 5 ein vorgefertigtes Einbaumodul 6 bilden. In Fig. 1 ist der Gassack 5 in der aufgeblasenen Betriebsstellung dargestellt.

Im Ausführungsbeispiel ist die Aufprallschutzeinrichtung 1 als Seitenaufprallschutzeinrichtung ausgebildet und das vorgefertigte Einbaumodul 6 ist an einem Türinnenblech 7 einer Seitentür 8 befestigt. Dem Einbaumodul 6 vorgelagert ist eine Türverkleidung 9, an der an einer aufrechten Wand eine durch eine Abdeckung 10 verschließbare Austrittsöffnung 11 für den aufgeblasenen Gassack 5 vorgesehen ist. Die Abdeckung 10 umfaßt zwei schwenkbare Klappenhälften, die über eine Sollreißstelle miteinander verbunden sind. Der Gassack 5 besteht aus zwei etwa gleich großen übereinanderliegenden Gewebelagen 12, 13, die randseitig über zwei mit geringem Abstand zueinander angeordnete Umfangsnähte 14 miteinander verbunden sind. Innerhalb des Gassacks 5 ist zumindest ein Fangband 15 vorgesehen, mit dem die Befüllungsform des Gassackes 5 beim Aufblasen gesteuert wird.

Erfindungsgemäß ist ein Ende 16 des Fangbandes 15 mit dem Gasgenerator 4 und das andere Ende 17 des Fangbandes 15 mit der dem Insassen 2 zugekehrten Gewebelage 13 des Gassackes 5 verbunden. Der Gassack 5 ist durch eine innenliegende Trennwand 18 in zwei miteinander verbundene Kammern 19, 20 unterteilt. Im Ausführungsbeispiel sind die beiden Kammern 19, 20 übereinanderliegend angeordnet, wobei die erste, untenliegende Kammer 19 dem Brust- / Beckenbereich des Insassen zugeordnet ist (Thorax-Kammer).

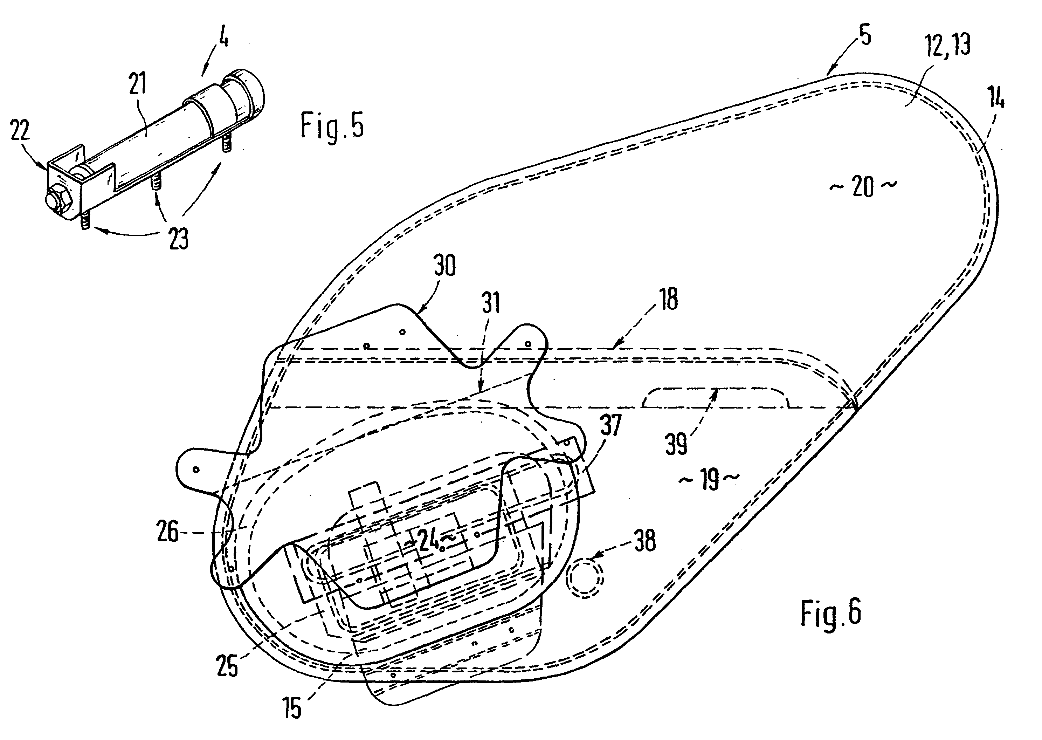

Gemäß Fig. 5 wird der Gasgenerator 4 durch einen langgestreckten Rohrgenerator 21 gebildet, der innerhalb der ersten Kammer 19 angeordnet und örtlich mit dieser verbunden ist. Der Rohrgenerator 21 ist an einem Generatorträger 22 in axialer und radialer Richtung befestigt. An der dem Rohrgenerator 21 abgekehrten Seite des Generatorträgers 22 sind mehrere beabstandete Schraubbolzen 23 angebracht, die zum Festlegen des Rohrgenerators 21 am Gehäuse 3 und außerdem zum Befestigen des Gassackes 5 und des innenliegenden Fangbandes 15 dienen.

Im Ausführungsbeispiel sind drei beabstandete Schraubbolzen 23 vorgesehen. Der Rohrgenerator 21 wird zusammen mit dem Generatorträger 22 durch eine rechteckförmige Montageöffnung 24 der Gewebelage 12 in das Innere des Gassacks 5 eingeführt und danach wird das generatorseitige Ende 16 des innenliegenden Fangbandes 15 an den drei Schraubbolzen 23 eingehängt. Hierzu sind am Fangband 15 entsprechende kreisrunde Bohrungen vorgesehen. Zur Erleichterung der Montage kann das Fangband 15 im Bereich des generatorseitigen Endes 16 an der Gewebelage 12 mit einer Fixiernaht befestigt werden (nicht näher dargestellt).

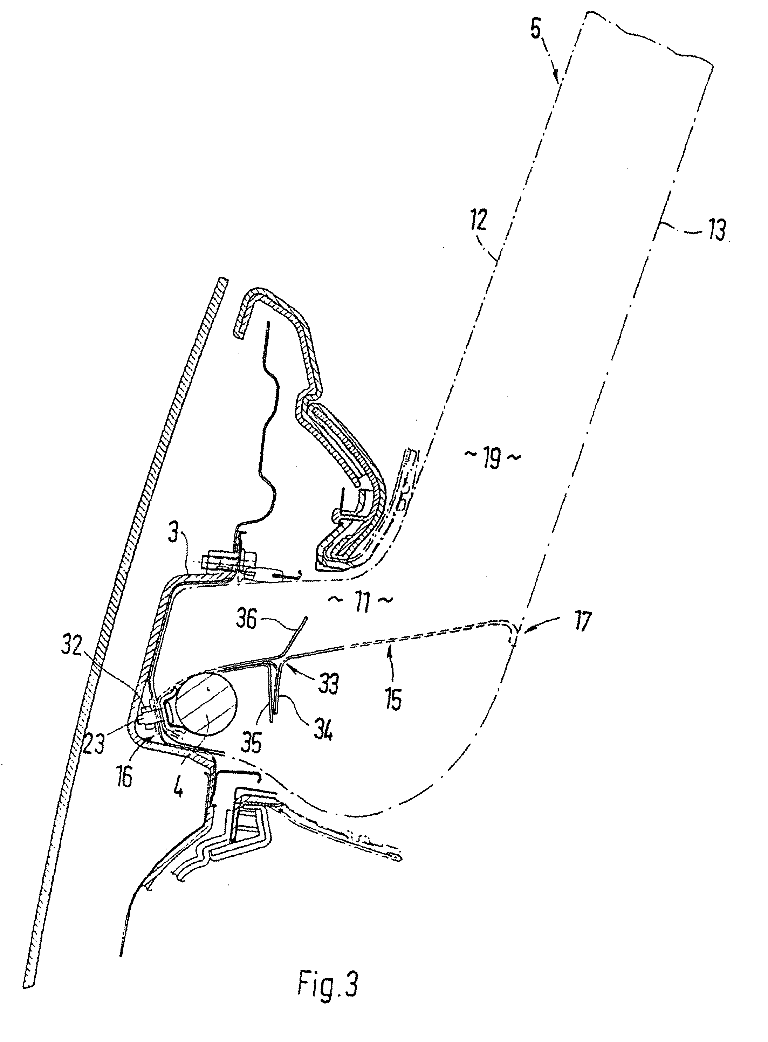

Im Bereich des Gasgenerators 4 ist die benachbarte Gewebelage 12 des Gassackes 5 innenseitig und außenseitig jeweils mit zwei übereinanderliegenden Verstärkungslagen 25, 26 versehen, die mit der mittig aufgenommenen Gewebelage 12 über eine doppelte Naht verbunden sind. Die inneren Verstärkungslagen sind mit 25 und die äußeren Verstärkungslagen sind mit 26 bezeichnet. Im Bereich der Montageöffnung 24 für den Gasgenerator 4 sind sowohl an der Gewebelage 12 als auch an den Verstärkungslagen 25, 26 freigeschnittene, schwenkbare Lappenabschnitte ausgebildet, die nach dem Einsetzen des Gasgenerators 4 die Montageöffnung 24 wieder verschließen. Die Lappenabschnitte der äußeren Verstärkungslagen 26 sind nur mit ihrem oberen Rand fest mit dieser verbunden, wogegen die Lappenabschnitte der inneren Verstärkungslagen 25 nur mit ihrem unteren Rand einstückig an die inneren Verstärkungslagen angeschlossen sind. Die beiden Lappenabschnitte der mittleren Gewebelage 12 sind am linken und rechten Rand der Montageöffnung 24 mit der Gewebelage 12 verbunden. Durch diese Anordnung erfolgt eine versetzte Überlappung der Lappenabschnitte nach dem Einsetzen des Gasgenerators 4. Nach dem Einhängen des Fangbandes 15 werden die Schraubbolzen 23 des Generatorträgers 22 durch korrespondierende kreisrunde Ausnehmungen der Gewebelage 12 und der Verstärkungslagen 25, 26 hindurchgeführt und der Gassack 5 wird zusammengefaltet. Eine ebenfalls an den Schraubbolzen 23 eingehängte, mit einem Ende mit dem Gassack 5 verbundene Schutzhülle 30 umhüllt den zusammengefalteten Gassack 5. Die Schutzhülle 30 weist eine Sollbruchstelle 31 auf, die beim Aufblasen des Gassackes 5 reißt. Der zusammengefaltete Gassack 5 mit dem innenliegenden Gasgenerator 4 wird in das Gehäuse 3 eingesetzt, wobei die Schraubbolzen 23 durch Öffnungen des benachbarten Gehäuses 3 hindurchgesteckt werden. Auf die vorstehenden Gewindeabschnitte der Schraubbolzen 23 werden von außen her Muttern 32 aufgedreht. Das in der Thorax-Kammer 19 vorgesehene Fangband 15 ist zweilagig ausgebildet. In einem Teilbereich 33 seiner Längserstreckung ist das Fangband 15 mehrlagig zusammengefaltet, wobei die übereinanderliegenden Lagen des Fangbandes 15 durch eine Reißnaht 34 lösbar miteinander verbunden sind. Die Reißnaht 34 ist beidseitig durch außenliegende Schutzlagen 35, 36 abgedeckt, wobei das dem Gasgenerator 4 zugekehrte Ende beider Schutzlagen 35, 36 mit dem Fangband 15 vernäht ist (Fig. 3).

Das dem Insassen 2 zugekehrte Ende 17 des Fangbandes 15 ist unter Zwischenschaltung einer rechteckförmigen inneren Verstärkungslage 37 an die außenliegende, dem Insassen zugewandte Gewebelage 13 des Gassacks 5 angeschlossen, wobei die Verstärkungslage 37 eine wesentlich größere Breite aufweist als das Fangband 15. Das Fangband 15 ist zwischen Verstärkungslage 37 und Gewebelage 13 hindurchgeführt, wobei die Verstärkungslage 37 mit der Gewebelage 13 über zwei umlaufende Verbindungsnähte verbunden ist. An der unteren Kammer 19 und gegebenenfalls an der oberen Kammer 20 des Gassacks 5 können örtlich kreisringförmige Abnäher 38 zwischen beiden Gewebelagen 12, 13 des Gassacks 5 zum definierten Aufblasen der entsprechenden Kammer 19, 20 vorgesehen sein, wobei sich die Abnäher 38 beim Überschreiten eines vorbestimmten Innendrucks lösen. An der Trennwand 18 zwischen beiden Kammern 19, 20 ist zumindest eine Durchströmöffnung 39 vorgesehen, durch die der Gasstrom nach dem Aufblasen der ersten Kammer 19 in die zweite Kammer 20 hindurchströmen kann.

Beim Aufblasen des Gassackes 5 wird die untere Kammer 19 in Richtung Insasse bewegt, wobei durch das vernähte Fangband 15 der Weg und die Geschwindigkeit des Gassackes 5 zeitlich reduziert wird (siehe Fig. 3). Ab einem definierten Innendruck in der ersten Kammer 19 reißt die Reißnaht 34 des Fangbandes 15 und die erste Kammer 19 bzw. der Gassack 5 wird weiter in Richtung Insasse 2 bewegt. Zeitverzögert zur ersten Kammer 19 wird die darüberliegende, dem Kopfbereich des Insassen zugekehrte zweite Kammer 20 des Gassackes 5 aufgeblasen. Der erfindungsgemäße Gassack 5 weist keine außenseitigen Abströmöffnungen auf.

## Patentansprüche

1. Seitenaufprallschutzeinrichtung für einen Insassen eines Fahrzeuges mit einem mit einem Gasgenerator (4) zusammenwirkenden aufblasbaren Gassack (5), der mit zumindest einem innenliegenden Fangband versehen ist und zwei miteinander verbundene, übereinander liegende Kammern (19, 20) umfasst, wobei eine erste Kammer (19) den Brust/Beckenbereich des Insassen und eine zweite Kammer (10) dem Kopfbereich des Insassen zugeordnet ist und die mit dem Gasgenerator (4) verbundene erste Kammer (19) im Kollisionsfall vor der zweiten Kammer (20) aufgeblasen wird, wobei der Gasgenerator (4) entfernt vom umfangseitigen Rand des Gassackes (5) angeordnet ist, **gekennzeichnet durch** die Kombination nachfolgender Merkmale:
- der Gassack (5) ist **durch** eine innenliegende Trennwand (18) in die zwei übereinanderliegend angeordneten Kammern (19, 20) unterteilt -
- als Gasgenerator (4) ist ein von einem Generatorträger (22) aufgenommener langgestreckter Rohrgenerator (21) vorgesehen, wobei der Rohrgenerator (21) zusammen mit dem Generatorträger (22) vollständig innerhalb der ersten Kammer (19) des Gassackes (5) angeordnet und örtlich mit dieser verbunden ist -
- das Fangband (15) zur Steuerung der Befüllungsform des Gassackes (5) ist zweilagig ausgebildet, mit einer Reißnaht (34) versehen und erstreckt sich innerhalb der ersten Kammer (19), wobei ein Ende (16) des Fangbandes (15) am Generatorträger (22) befestigt ist und das andere Ende (17) mit einer dem Insassen zugekehrten Gewebelage (13) des Gassackes (5) verbunden ist -
- das Fangband (15) ist zumindest im Bereich der Reißnaht (34) mit außenliegenden Schutzlagen (35, 36) versehen -
- an der einem Gehäuse (3) zugewandten Gewebelage (12) des Gassackes (5) ist im Bereich der ersten Kammer (19) eine rechteckförmige Montageöffnung (24) zum Einsetzen des Rohrgenerators (21) vorgesehen -
- die Gewebelage (12) des Gassackes (5) ist benachbart der Montageöffnung (24) innen- und außenseitig mit jeweils zwei übereinanderliegenden Verstärkungslappen (25, 26) versehen -
- die Montageöffnung (24) ist **durch** überlappende Lappenabschnitte der Gewebelage (12) und der Verstärkungslagen (25, 26) verschließbar.

2. Seitenaufprallschutzeinrichtung nach Anspruch 1, **dadurch gekennzeichnet, dass** das Fangband (15) an dem dem Insassen (2) zugekehrten Ende über eine innere Verstärkungslage (37) mit der zugehörigen Gewebelage (13) des Gassacks (5) verbunden ist, wobei die innere Verstärkungslage (37) eine wesentlich größere Breite aufweist als das Fangband (15).

3. Seitenaufprallschutzeinrichtung nach Anspruch 1, **dadurch gekennzeichnet, dass** zur Halterung des Rohrgenerators (21) ein langgestreckter Generatorträger (22) vorgesehen ist, der auf der dem Rohrgenerator (21) abgekehrten Seite örtlich vorstehende Schraubbolzen (23) aufweist.

4. Seitenaufprallschutzeinrichtung nach den Ansprüchen 1 und 3, **dadurch gekennzeichnet, dass** an den Schraubbolzen (23) des Generatorträgers (22) das gasgeneratorseitige Ende (16) des Fangbandes (15) und der Gassack (5) eingehängt sind und dass zur Befestigung des Gassackes (5) und des Gasgenerators (4) die vorstehenden Schraubbolzen (23) durch Öffnungen des benachbarten Gehäuses (3) hindurchgeführt sind, wobei auf die vorstehende Gewindeabschnitte der Schraubbolzen (23) von außen her Muttern (32) aufgedreht sind.

5. Seitenaufprallschutzeinrichtung nach einem oder mehreren der vorangegangenen Ansprüche, **dadurch gekennzeichnet, dass** zwischen beiden randseitig miteinander verbundenen Gewebelagen (12, 13) des Gassacks (5) im Bereich der ersten Kammer (19) zumindest ein Abnäher (38) vorgesehen ist, der die beiden Gewebelagen (12, 13) miteinander verbindet, wobei oberhalb eines definierten Druckes innerhalb der ersten Kammer (19) der Abnäher (38) aufreißt.

6. Seitenaufprallschutzeinrichtung nach einem oder mehreren der vorangegangenen Ansprüche, **dadurch gekennzeichnet, dass** im Bereich der den Kopf des Insassen (2) zugekehrten zweiten Kammer (20) des Gassacks (5) zur Unterstützung der Entfaltung Abnäher und/oder zumindest ein mit einer Reißnaht versehenes Fangband angeordnet ist.

7. Seitenaufprallschutzeinrichtung nach einem oder mehreren der vorangegangenen Ansprüche, **dadurch gekennzeichnet, dass** das Fangband (15) im Bereich der Halterung des Rohrgenerators (21) mit einer Fixiernaht an der Gewebelage (12) des Gassacks (5) befestigt ist.

## Claims

1. A lateral-impact protection device for an occupant of a vehicle, with an inflatable airbag (5) which co-operates with a gas generator (4) and which is provided with at least one rebound strap situated on the inside and two chambers (19, 20) connected to each other and situated one above the other, wherein a first chamber (19) is associated with the chest / pelvis area of the occupant and a second chamber (10) is associated with the head area of the occupant and the first chamber (19) connected to the gas generator (4) is inflated before the second chamber (20) in the event of a collision, wherein the gas generator (4) is situated at a distance from the peripheral edge of the airbag (5), **characterized by** the combination of the following features:
- the airbag (5) is subdivided by a separating wall (18) situated on the inside into the two chambers (19, 20) situated one above the other,
- an elongate tubular generator (21) received by a generator support (22) is provided as the gas generator (4), wherein the tubular generator (21) together with the generator support (22) is arranged completely inside the first chamber (19) of the airbag (5) and is connected locally to the latter,
- the rebound strap (15) for controlling the filling shape of the airbag (5) is constructed with two layers, is provided with a tear seam (34) and extends inside the first chamber (19), wherein one end (16) of the rebound strap (15) is fastened to the generator support (22) and the other end (17) is connected to a fabric layer (13) of the airbag (5) facing the occupant,
- the rebound strap (15) is provided at least in the region of the tear seam (34) with protective layers (35, 36) situated on the outside,
- on the fabric layer (12) of the airbag (5) facing the housing (3) a rectangular assembly opening (24) for the insertion of the tubular generator (21) is provided in the region of the first chamber (19),
- the fabric layer (12) of the airbag (5) is provided on the inside and the outside in each case with two reinforcement tabs (25, 26) situated one above the other adjacent to the assembly opening (24), and
- the assembly opening (24) can be closed by overlapping tab portions of the fabric layer (12) and of the reinforcement layers (25, 26).

2. A lateral-impact protection device according to Claim 1, **characterized in that** the rebound strap (15) is connected at the end facing the passenger (2) to the associated fabric layer (13) of the airbag (5) by way of an inner reinforcement layer (37), the inner reinforcement layer (37) having a considerably greater width than the rebound strap (15).

3. A lateral-impact protection device according to Claim 1, **characterized in that** an elongate generator support (22), which has screw bolts (23) projecting locally on the side remote from the tubular generator (21), is provided in order to mount the tubular generator (21 ).

4. A lateral-impact protection device according to Claims 1 and 3, **characterized in that** the end (16) of the rebound strap (15) towards the gas generator and the airbag (5) are suspended on the screw bolts (23) of the generator support (22), and in order to fasten the airbag (5) and the gas generator (4) the projecting screw bolts (23) pass through openings in the adjacent housing (3), wherein nuts (32) are screwed from the outside onto the projecting threaded portions of the screw bolts (23).

5. A lateral-impact protection device according to one or more of the preceding Claims, **characterized in that** between the two fabric layers (12, 13) of the airbag (5) connected to each other at the edge at least one unravelling seam (38), which connects the two fabric layers (12, 13) to each other, is provided in the region of the first chamber (19), wherein the unravelling seam (38) tears above a defined pressure inside the first chamber (19).

6. A lateral-impact protection device according to one or more of the preceding Claims, **characterized in that** the unravelling seam and/or at least one rebound strap provided with a tear seam is arranged in the region of the second chamber (20) of the airbag (5) facing the head of the occupant (2) in order to assist the unfolding.

7. A lateral-impact protection device according to one or more of the preceding Claims, **characterized in that** the rebound strap (15) is fastened to the fabric layer (12) of the airbag (5) by a fixing seam in the region of the mounting of the tubular generator (21).

## Revendications

1. Dispositif de protection contre une collision latérale pour un passager d'un véhicule comportant un sac gonflable (5) coopérant avec un générateur de gaz (4), lequel est pourvu d'au moins une bande de retenue située à l'intérieur, et comprend deux chambres (19, 20) superposées communiquant entre elles, une première chambre (19) étant associée à la région de la poitrine/du bassin du passager et une deuxième chambre (10) à la région de la tête du passager, et la première chambre (19) communiquant avec le générateur de gaz (4) étant gonflée en cas de collision avant la deuxième chambre (20), le générateur de gaz (4) étant disposé éloigné du bord périphérique du sac gonflable (5), **caractérisé par** la combinaison des caractéristiques suivantes :
- le sac gonflable (5) est partagé par une cloison (18) située à l'intérieur dans les deux chambres (19, 20) superposées -
- comme générateur de gaz (4) est prévu un générateur tubulaire (21) allongé reçu par un support de générateur (22), le générateur tubulaire (21) étant disposé avec le support de générateur (22) entièrement à l'intérieur de la première chambre (19) du sac gonflable (5) et étant relié localement à celui-ci -
- la bande de retenue (15) pour la commande de la forme de remplissage du sac gonflable (5) est réalisée à deux couches, est pourvue d'une couture arrachable (34) et s'étend à l'intérieur de la première chambre (19), une extrémité (16) de la bande de retenue ( 15) étant fixée au support de générateur (22) et l'autre extrémité (17) étant reliée à une couche de tissu (13) du sac gonflable (5) tournée vers le passager -
- la bande de retenue (15) est pourvue, au moins dans la zone de la couture arrachable (34), de couches de protection (35, 36) situées à l'extérieur -
- sur la couche de tissu (12) tournée vers un boîtier (3) du sac gonflable (5) est prévue, dans la zone de la première chambre (19), une ouverture de montage (24) rectangulaire pour y insérer le générateur tubulaire (21) -
- la couche de tissu (12) du sac gonflable (5) est pourvue au voisinage de l'ouverture de montage (24), sur le côté intérieur et le côté extérieur, de deux pattes de renfort (25, 26) superposées -
- l'ouverture de montage (24) peut être fermée par des segments de patte se chevauchant de la couche de tissu (12) et des couches de renfort (25, 26).

2. Dispositif de protection contre une collision latérale selon la revendication 1, **caractérisé en ce que** la bande de retenue (15) est reliée à l'extrémité tournée vers le passager (2), par une couche de renfort (37) intérieure, à la couche de tissu (13) correspondante du sac gonflable (5), la couche de renfort intérieure (37) présentant une largeur sensiblement plus grande que la bande de retenue (15).

3. Dispositif de protection contre une collision latérale selon la revendication 1, **caractérisé en ce que** pour la fixation du générateur tubulaire (21), il est prévu un support de générateur (22) allongé qui présente des boulons (23) dépassant localement sur le côté tourné à l'opposé du générateur tubulaire (21).

4. Dispositif de protection contre une collision latérale selon les revendications 1 et 3, **caractérisé en ce qu'**aux boulons (23) du support de générateur (22) sont accrochés l'extrémité (16) côté générateur de gaz de la bande de retenue (15) et le sac gonflable (5), et **en ce que** pour la fixation du sac gonflable (5) et du générateur de gaz (4), les boulons (23) saillants passent à travers des ouvertures du boîtier (3) voisin, des écrous (32) étant vissés de l'extérieur sur les portions filetées dépassantes des boulons (23).

5. Dispositif de protection contre une collision latérale selon une ou plusieurs des revendications précédentes, **caractérisé en ce qu'**entre les deux couches de tissu (12, 13) reliées entre elles sur les bords du sac gonflable (5) est prévue, dans la zone de la première chambre (19), au moins une pince (38) qui relie entre elles les deux couches de tissu (12, 13), la pince (38) s'ouvrant au-dessus d'une pression définie à l'intérieur de la première chambre (19).

6. Dispositif de protection contre une collision latérale selon une ou plusieurs des revendications précédentes, **caractérisé en ce que** dans la zone de la deuxième chambre (20) du sac gonflable (5), tournée vers la tête du passager (2), il est prévu des pinces et/ou au moins une bande de retenue pourvue d'une couture arrachable, pour faciliter le déploiement.

7. Dispositif de protection contre une collision latérale selon une ou plusieurs des revendications précédentes, **caractérisé en ce que** la bande de retenue (15) est fixée, par une couture de fixation, à la couche de tissu (12) du sac gonflable (5), dans la zone de la fixation du générateur tubulaire (21).
